# EUROPEAN PATENT APPLICATION

(11) **EP 1 162 609 A2**
(43) Date of publication of application: **12.12.2001**
(21) Application number: 01304864.0
(22) Date of filing: 04.06.2001
(51) Int. Cl.: G11B 7/09

(54) **Disc reproducing apparatus and disc reproducing method**

(30) Priority: 07.06.2000 JP 2000169947
(71) Applicant: SONY CORPORATION, Tokyo (JP)
(72) Inventor: Okamoto, Koichi, Sony Corporation, Tokyo (JP)
(74) Representative: Ayers, Martyn Lewis Stanley

(57) **Abstract**

This disc reproducing apparatus comprises an optical pickup for reproducing a signal recorded in a disc from the disc, an amplifier for amplifying the signal outputted from this optical pickup at a predetermined gain, a focus servo circuit for matching the focus of the optical pickup with the disc using the signal outputted from this amplifier, and control means. The control means executes focusing of the optical pickup using the gain of the amplifier as a predetermined gain when starting reproduction of the signal from the disc, starts reproduction of the signal from the disc when this focusing is successful, and executes the second focusing of the optical pickup by setting the gain of the amplifier to a higher gain than the predetermined gain and starts reproduction of the signal when the focusing is unsuccessful.

## Description

The present invention relates to a disc reproducing apparatus and a disc reproducing method.

An optical pickup is used to reproduce a signal recorded on a CD. However, when regenerating the signal, the focus of the optical pickup needs to match the signal plane (reflection surface) of the CD. Therefore, a focus servo circuit is provided in a CD player. A focusing error of the optical pickup is detected, and at the same time servo control is executed so that the focusing error can be eliminated.

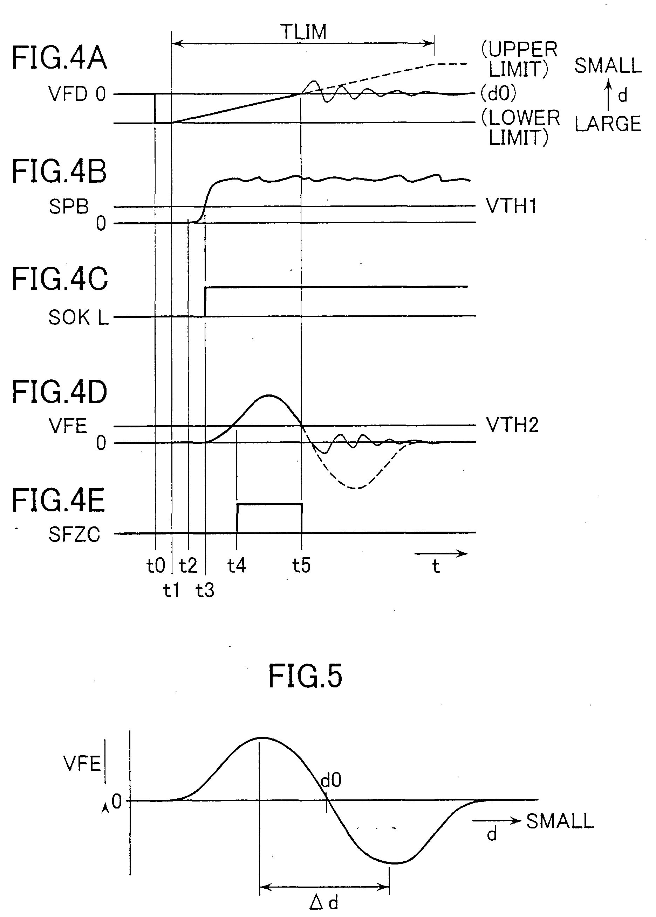

In this case, an astigmatism method and the Foucault method are known as methods of detecting the focusing error. According to these detection methods, a focusing error voltage V FE of such characteristics as shown in Fig. 5 can be obtained.

To be specific, Fig. 5 shows the relationship between the opposed interval d between the object lens of the optical pickup and the signal plane of a CD, and a focusing error voltage V FE. The focusing error voltage V FE is set to V FE = 0 when the lens is in focus (this occurs when d = d0). Further, the focusing error voltage V FE changes in an S-shaped form against the change of the opposed interval d centering around the interval d0 at the time of exact focusing. Accordingly, a focus servo circuit will servo-control the opposed interval d so that V FE = 0 can be obtained within a proportional range Δd between the maximum point and the minimum point of its S-shaped characteristics.

However, in this case, as also shown in Fig. 5, V FE = 0 is obtained even within the outside range of S-shaped characteristics. So in a practical CD player, when reproducing a CD is started, first, the opposed interval d is driven within the proportional range Δd of the S-shaped characteristics, and then an attempt is made to perform focus servo control. Besides, in the following, the processing in which the opposed interval d is driven into the proportional range Δd of the S-shaped characteristics when starting reproducing the CD is called a "focus search."

Fig. 4 shows a voltage waveform of each portion when executing the focus search. In this case, the object lens of the optical pickup is mounted on a moving coil that deflects the object lens in the direction of the optical axis, and when a drive voltage supplied to the moving coil is 0, the object lens is constituted so as to be located in the vicinity of d = d0. Further, in general, a CD is arranged horizontally, and is arranged so that the signal plane can face downward, and the optical pickup is located under the CD.

When the playback button is pressed at an optional time t0, as shown in Fig. 4A, the focus drive voltage V FD reaches the minimum value from 0 V at the time t0, for example. Then, consequently, the object lens descends to the lower limit position at a time slightly delayed from the timet0. At this time, the opposed interval d for the signal plane of a CD is maximized (the scale of the interval d is shown at the right side of Fig. 4A).

Subsequently, when a time t1 is reached, the focus drive voltage V FD gradually rises from the minimum value. As this focus drive voltage rises, the object lens gradually ascends and the opposed interval d will be reduced.

As shown in Fig. 4B, when a time t2 is reached, a playback signal S-PB of the CD is outputted from the optical pickup. By discriminating the level of this signal S PB using a predetermined value V TH1, a regenerative detection signal S OK that rises at a time t3 is acquired, as shown in Fig. 4C.

Further, as shown in Fig. 4D, from almost the time t3, the focusing error voltage V FE starts an S-shaped change, and rises as shown in Fig. 4D. Then by discriminating the level of this focusing error voltage V-FE using a predetermined value V TH2, a focus check signal S FZC that rises at a time t4 is acquired, as shown in Fig. 4E.

The focusing error voltage V FE rises with the rise of the focus drive voltage V FD. When the maximum point is exceeded, the focusing error voltage gradually decreases later. When V FE = V TH2 is reached at a time t5, the signal S FZC falls. Then at this time, as clearly shown in Fig. 4 and Fig. 5, the opposed interval d will be located within the proportional range Δd.

Then the focus servo circuit is set on at the falling edge of this signal S FZC, and at this fall time t5 or later, a focused state for a CD is held by focus servo control. Accordingly, the CD can be reproduced from the time t5. Besides, after the time t5 or later, although the focus drive voltage V FD and the focusing error voltage V FE reach almost zero after both the voltages fluctuate to some extent, they slightly change corresponding to the focused state.

When a CD is loaded on a CD player, TOC data is reproduced from the CD. Also at this time, first, a focus search is executed, and then focus servo control is set on. Then another servo control is set on, and the TOC data is read. That is, both when the CD is loaded on the CD player and when the playback button is pressed, the focus search is executed, and after the focus servo control is validated, a signal (TOC data or musical data) is reproduced from the CD.

Hereupon, CDs are classified into a CD-R to which data can be written only once and a CD-RW to which data can be written about 1,000 times besides a read-only CD-ROM (generically called "CD" when CD-ROM, CD-R, and CD-RW are not discriminated).

For a CD-ROM, when the laser beam outputted from the optical pickup is reflected by the signal plane of the CD-ROM and returns to the optical pickup, an optical path difference occurs depending on the presence of a pit. So a signal is reproduced using this optical path difference.

For a CD-R, too, since an optical path difference occurs depending on the presence of a pit, a signal is reproduced using this optical path difference. Further, for a CD-RW, since the amount of reflected laser beam depends on the presence of a pit, a signal is reproduced by detecting the difference of this reflection amount.

For a CD-ROM, when the laser beam outputted from the optical pickup is reflected by the signal plane and returns to the optical pickup, it returns with the same or equivalent amount of light as for a CD-ROM. So a CD-R can be reproduced in an unchanged state by a CD-ROM reproducing apparatus.

However, for a CD-RW, since the amount of reflected laser beam that returns from the signal plane to the optical pickup is about one quarter that for a CD-ROM, the CD-RW cannot normally be reproduced by a CD-ROM reproducing apparatus.

Hence, in a reproducing apparatus that reproduces a CD-ROM, CD-R, and CD-RW, the following actions are usually taken:
(1) The type of CD is discriminated by checking the reflectivity of the CD.
(2) When the discrimination result of (1) indicates a CD-ROM or CD-R, the gain of an RF amplifier that amplifies the output signal of the optical pickup is set as the reference gain.
(3) When the discrimination result of (1) indicates a CD-RW, the gain of the RF amplifier is set to four times the reference gain, for example.

However, performing this will execute a focus search for checking the reflectivity of a CD, and will execute a focus search for focus servo control also when reproducing the CD is started.

However, when a CD is reproduced, it takes a long time to execute a focus search twice until playback is actually started.

An object of the present invention is to solve such problems.

In the present invention, for example, a disc reproducing apparatus is obtained, comprising:
an optical pickup that reproduces a signal recorded in a disc from the disc;
an amplifier that amplifies the signal outputted from this optical pickup at a predetermined gain;
a focus servo circuit that matches the focus of the optical pickup with the disc using the signal outputted from this amp; and
a control circuit that executes predetermined control, wherein the control circuit
executes focusing of the optical pickup using the gain of the amplifier as a reference gain when starting reproduction of the signal from the disc;
validates the focus servo circuit and starts the reproduction of the signal from the disc when this focusing is successful;
executes the second focusing of the optical pickup by setting the gain of the amplifier to a higher gain than the reference gain when the focusing is unsuccessful; and
validates the focus servo circuit and starts the reproduction of the signal from the disc when this second focusing is successful.

Accordingly, when a disc has the first optical characteristics, playback starts in the first focusing, and when a disc has the second optical characteristics, playback starts in the second focusing.

According to the present invention, even if a CD is any of a CD-ROM, CD-R or CD-RW, reproduction can be started at the shortest time. Further, even if the CD is any of the CD-ROM, CD-R or CD-RW, signal processing is executed at a normal signal level. So the reproduction and various types of servo control can appropriately be performed.

The invention will be-more clearly understood from the following description, given by way of example only, with reference to the accompanying drawings, in which:
Fig. 1 is a flow diagram showing one embodiment of the present invention;
Fig. 2 is a flowchart showing one embodiment of the present invention;
Fig. 3 is a flowchart showing one yet another embodiment of the present invention;
Fig. 4 is a waveform chart for describing the present invention; and
Fig. 5 is a characteristic diagram for describing the present invention.

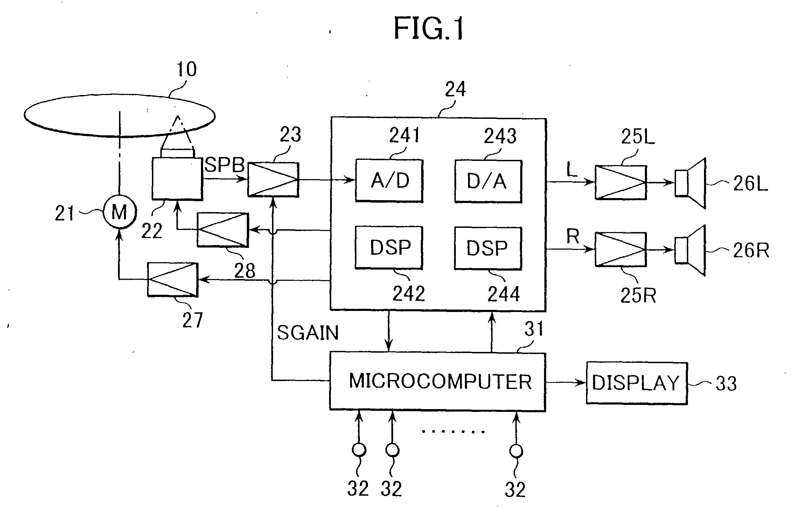

Fig. 1 shows the case where the present invention applies to a CD player for audio discs. First, the basic configuration and operation are described as follows.

That is, a symbol 10 indicates a CD. This CD 10, as described above, is any of a CD-ROM, CD-R or CD-RW, and, for example, is horizontally set so that the signal plane forms the underside. Further, the CD 10 is rotated at a predetermined speed by a spindle motor 21 when reproducing it, and the optical pickup 22 is arranged facing the signal plane of the CD 10.

This optical pickup 22, as clearly described above, has a laser diode for reading the pits of the CD 10, a photosensor, and the object lens, and has a moving coil for changing the focus position of the object lens. Then a signal S PB recorded on the CD 10 is reproduced by this optical pickup 22, and this playback signal S PB is supplied to a reproduction processing circuit 24 via an RF amplifier 23.

This reproduction processing circuit 24 is composed of an IC called a CD-DSP. This circuit has an A/D converter circuit 241 that A/D-converts an input playback signal S PB, a decoding DSP 242, a D/A converter circuit 243 that D/A-converts decoded digital audio data, and a digital servo processor 244.

In this case, the DSP 242 executes reproduction processing, such as EFM demodulation, de-interleaving, and error correction for a playback signal S PB converted to a digital signal by the A/D converter circuit 241 and digital audio data is decoded. Further, the digital servo processor 244 produces control voltages and control signals necessary for the focus servo, tracking servo, sled servo, spindle servo, and focus search of the CD 10.

In the reproduction processing circuit 24, audio signals L, R of the left and right channels are decoded from the playback signal S PB outputted from the RF amplifier 23 and these signals L, R are supplied to speakers 26L, 26R of the left and right channels via output amps 25L, 25R.

At this time, a spindle error signal that indicates an error of the rotational speed of the CD 10 is acquired from the reproduction processing circuit 24, and this spindle error signal is supplied to the spindle motor 21 via a drive amplifier 27. Thus, the rotational speed of the spindle motor 21 is controlled, and the CD 10 is servo-controlled so that the linear velocity of the rotation can be set to a specified constant value.

Further, the focus drive voltage V FD that corresponds to a focusing error of the optical pickup 22 is acquired from the reproduction processing circuit 24. This voltage V FD is supplied to the moving coil of the optical pickup 22 and focus servo control of the object lens is executed.

A tracking error voltage that corresponds to a tracking error of the optical pickup 22 is acquired from the reproduction processing circuit 24. This voltage is supplied to the moving coil of the optical pickup 22 via a drive amplifier 28 and tracking servo control of the object lens is executed. Then at this time, the direct current component of the tracking error voltage is supplied to a sled mechanism (not shown) of the optical pickup 22 and sled servo control is executed.

Further, a microcomputer 31 is provided as controlmeans, that is, a system control circuit. Various operation buttons (control switches) 32 are connected to this microcomputer 31, and, for example, a display 33 consisting of an LCD is connected. Then various control signals are supplied from the microcomputer 31 to the reproduction processing circuit 24, and various data are supplied from the reproduction processing circuit 24 to the microcomputer 31.

The basic configuration and operation of a CD player are described above, and the present invention is further constituted for such CD player as follows.

That is, the RF amplifier 23 uses a variable gain amplifier that can switch the gain into a reference gain AL [double] and a high gain AH [double] (for example, AH = 4 x AL). Further, a switching control signal S GAIN of the gain is supplied from the microcomputer 31 to the amplifier 23.

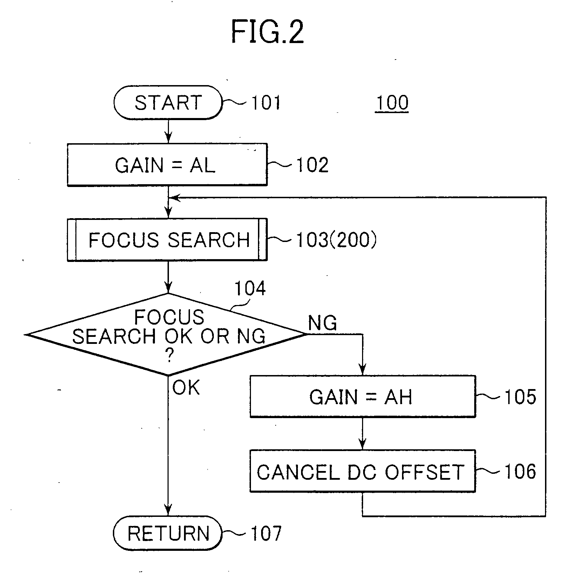

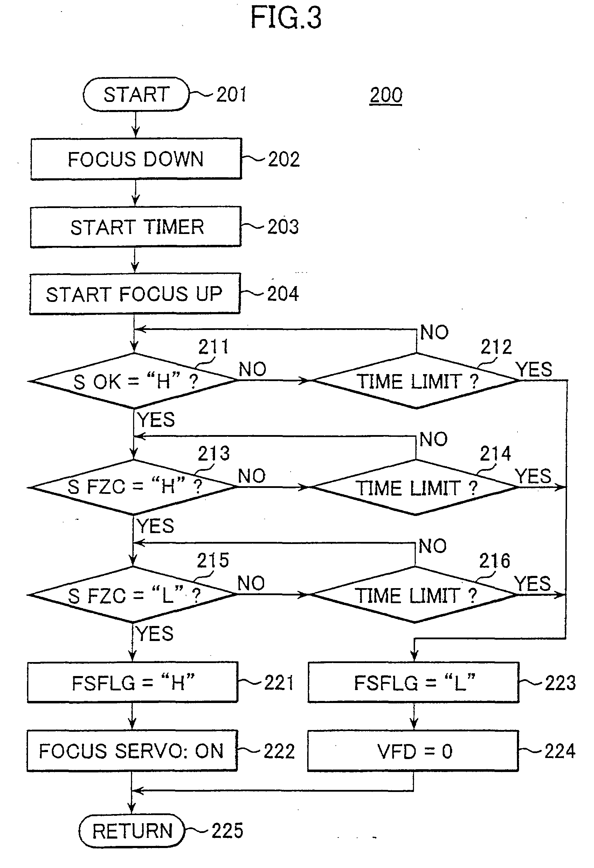

Further, for example, a focus search routine 100 shown in Fig. 2 is provided in the microcomputer 31 as part of the program the microcomputer executes, and, for example, a routine 200 shown in Fig. 3 is prepared in the DSP 244 of the reproduction processing circuit 24 as part of the routine the DSP 244 executes. Besides, in Fig. 2 and Fig. 3, only the parts of the routines 100, 200 related to the present invention are selected and shown.

The CD 10 refers to a CD-ROM, CD-R, or CD-RW, and in general, many of the CDs to be reproduced are CD-ROMs. (By far the largest number of CDs worldwide are CD-ROMs.) Hereupon, in the routines 100, 200, when reproducing the CD 10 is started, a focus search is executed assuming the CD 10 is a CD-ROM. When this focus search is successful, playback of the CD 10 is started. When it is unsuccessful, a focus search is re-executed assuming the CD 10 is a CD-RW, and playback of the CD 10 is started.

That is, when regenerating TOC from the CD 10 (loading the CD 10 on a CD player) or when pressing the playback button among the operation buttons 32, the processing in the microcomputer 31 starts from step 101 of the routine 100.

Next, in step 102, the gain of the RF amplifier 23 is a basic gain AL [double] with a control signal S GAIN, that is, is a gain that assumes the CD 10 is a CD-ROM or CD-R. Subsequently, in step 103, the execution of the routine 200 is instructed from the microcomputer 31 to the DSP 244, and, accordingly, the routine 200 is executed by the DSP 244.

Hereupon, although the details will be described later, according to the DSP 244 and the routine 200. a focus search is executed. When the focus search is successful, a focus flag FSFLG is set to "H" and focus servo control is set on. When the focus search is unsuccessful, the flag FSFLG is set to "L".

When the processing of the routine 200 terminates, the processing in the routine 100 advances from step 103 to step 104. In this step 104, the result of a focus search is discriminated by checking the flag FSFLG. When the focus search is successful (FSFLG = "H"), the processing advances from step 104 to step 107, and this routine 100 terminates.

On the other hand, as a result of the check of step 104, when a focus search is unsuccessful (FSFLG = "L"), the CD 10 maybe a CD-RW. Hereupon, in this case, the processing advances from step 104 to step 105. In this step 105, the gain of the RF amplifier 23 changes to a high gain [double] with a control signal S GAIN, that is, a gain that assumes the CD 10 is a CD-RW. Next, in step 106, a direct current offset component contained in an output signal S PB of the RF amplifier 23 is canceled, and then the processing returns to step 103.

Subsequently, in step 103 (routine 200), a focus search is executed in the same manner as the case where the CD 10 is a CD-ROM and a CD-R. When the focus search is successful, the routine 100 terminates as described above.

Besides, if this routine 100 is executed when loading the CD 10 on a CD player, each servo control is sequentially set on following the routine 100 and reproduction of TOC data is started from the CD 10. Further, if the routine 100 is executed when pressing the playback button among the operation buttons 32, each servo control is sequentially set on following the routine 100 and reproduction of an audio signal is started from the CD 10.

On the other hand, in step 103, when the execution of the routine 200 is instructed from the microcomputer 31 to the DSP 244, the routine 200 is executed by the DSP 244 as follows.

That is, the processing of the DSP 244 starts from step 201 of the routine 200. Next, in step 202, the focus drive voltage V FD supplied from the DSP 244 to the optical pickup 22 is once set to the minimum value, as shown at the time t0 of Fig. 4A. Accordingly, the object lens of the optical pickup drops to the lower limit position and the opposed interval d between the object lens and the signal plane of the CD 10 is maximized.

Subsequently, when the time t1 is reached, in step 203, the measurement of a waiting time timer T TMR for assigning a predetermined time limit T LIM to a focus search is started. Next, in step 204, the focus drive voltage V FD is set from the time t1 so as to gradually rise from the minimum value. Accordingly, as this focus drive voltage V FD rises, the object lens gradually rises and the opposed interval d is reduced.

Besides, in this case, a time limit T LIM is, for example, as shown in Fig. 4A by a dashed line, the time until the object lens rises to the upper limit position (from the time t1) when a focus drive voltage V FD successively rises at the time t5 or later, too.

The processing of the DSP 244 advances to step 211 following step 204. In this step 211, whether a reproduction detection signal S OK rises is discriminated. Since the signal does not rise before the time t3, the processing advances from step 211 to step 212. Then in this step 212, whether the waiting time timer T TMR whose measurement is started in step 203 reaches the time limit T LIM is discriminated. When the timer T TMR does not reach the time limit, the processing returns from step 212 to step 211.

Accordingly, after the time t1 or later, until a regenerative detection signal S OK rises or the waiting time timer T TMR reaches the time limit T LIM, steps 211, 212 will be repeated.

When a regenerative detection signal S OK rises at the time t3, this signal is discriminated according to step 211, and the processing advances from step 211 to step 213. In this step 213, whether a focus check signal S FZC is successively rising over a predetermined fixed period τ is checked.

Since a signal S FZC does not rise before the time t3, the processing advances from step 213 to step 214. In this step 214, whether the waiting time timer T TMR of which the measurement is started in step 203 reaches the time limit T LIM is discriminated. When the timer T TMR does not reach the time limit, the processing returns from step 214 to step 213.

Accordingly, after the time t3 or later, until a focus check signal S FZC is successively rising over a predetermined fixed period τ or the waiting time timer T TMR reaches the time limit T LIM, steps 213, 214 will be repeated.

At the time t4, while a focus check signal S FZC is successively rising over a predetermined fixed period τ, this signal is discriminated according to step 213 and the processing advances from step 213 to step 215. In this step 215, whether the focus check signal S FZC rises is checked.

Before the time t5, since a signal S FZC does not fall, the processing advances from step 215 to step 216. In this step 216, whether the waiting time timer T TMR of which the measurement is started in step 203 reaches the time limit T LIM is discriminated. When the timer T TMR does not reach the time limit, the processing returns from step 216 to step 215.

Accordingly, after the time t4 or later, until a focus check signal S FZC falls or the waiting time timer T TMR reaches the time limit T LIM, steps 215, 216 will be repeated.

At the time t5, while a focus check signal S FZC falls, this signal is discriminated according to step 215 and the processing advances from step 215 to step 221. The focus check signal S FZC falls at the time t5 when a focus search is successful. Accordingly, in this step 221, the focus search flag FSFLG is set to "H" that indicates a success.

Subsequently, in step 222, the DSP 244 enters the state where focus servo control is executed, and the routine 200 terminates according to step 225. Accordingly, after the time t5 or later, a focused state for the CD 10 is held by focus servo control.

On the other hand, in step 212, 214 or 216, when it is detected that the waiting time timer T TMR reaches the time limit T LIM, this indicates that a focus search is unsuccessful.

Accordingly, in step 212, 214 or 216, when it is detected that the waiting time timer T TMR reaches the time limit T LIM, the processing advances from step 212, 214 or 216 to step 223. In this step 223, the focus search flag FSFLG is set to "L" that indicates a failure. Next in step 224, a focus drive voltage is once set off, and, subsequently, the routine 200 terminates according to step 225.

Thus, when the CD 10 is a CD-ROM or CD-R, it is discriminated in the first focus search that the CD 10 is a CD-ROM or CD-R. At the same time, focus servo control is validated and playback of the CD 10 is started. Further, when the CD 10 is a CD-RW, it is discriminated in the first focus search that it is a CD-RW. Focus servo control is validated in the second focus search and playback of the CD-RW is started.

Therefore, according to the CD player of Fig. 1, for a CD-ROM and CD-R which use many CDs 10, playback can be started in the first focus search and the time to playback can be shortened. Further, even if the CD 10 is a CD-RW, the playback can be started in the second focus search.

Regardless of the fact that the CD 10 is any of a CD-ROM, CD-R or CD-RW, if the gain of the RF amplifier 23 is set to a high gain AH, the level of the playback signal S PB of the optical pickup 22 is high when the CD 10 is a CD-ROM and CD-R. So the dynamic range of the playback signal S PB outputted from the RF amplifier 23 exceeds the dynamic range of the A/D converter circuit and normal A/D conversion is disabled. As a result, neither focus servo control nor tracking servo control can appropriately be performed.

However, in the CD player of Fig. 1, since the RF amplifier 23 is switched to a reference gain AL or a high gain AH in accordance with the fact that the CD 10 is a CD-ROM, CD-R or CD-RW, the dynamic range of a playback signal S PB will not exceed the dynamic range of the A/D converter circuit 241. Consequently, both focus servo control and tracking servo control can appropriately be performed.

Besides, in the aforementioned, even if the processing of steps 103 to 106 is executed the predetermined number of times, the CD 10 may not be loaded when a focus search is unsuccessful, so it is desirable that the routine 100 be terminated. Further, in the aforementioned, the present invention applies to a CD player, and can also apply to a CD-ROM drive and an optical type disc (such as a DVD) reproducing apparatus.

### [List of abbreviations used in this specification]

A/D: Analog to Digital
CD: Compact Disc
CD-DSP: CD Digital Signal Processor
CD-R: CD Recordable
CD-ROM: CD Read Only Memory
CD-RW: CD Rewritable
D/A: Digital to Analog
DSP: Digital Signal Processor
DVD: Digital Versatile Disc
EFM: Eight to Fourteen Modulation
IC: Integrated Circuit
LCD: Liquid Crystal Display
TOC: Table of Contents
RF: Radio Frequency
laser: Light Amplification by Stimulated Emission of Radiation

## Claims

1. A disc reproducing apparatus, comprising:
an optical pickup for reproducing a signal recorded in a disc from the disc;
an amplifier for amplifying said signal outputted from this optical pickup at a predetermined gain;
a focus servo circuit for matching the focus of said optical pickup with said disc using said signal outputted from this amp; and
control means,
wherein said control means
executes focusing of said optical pickup using the gain of said amplifier as a predetermined gain when starting reproduction of said signal from said disc;
starts reproduction of said signal from said disc when this focusing is successful; and
executes the second focusing of said optical pickup by setting the gain of said amplifier to a higher gain than said predetermined gain and starts reproduction of said signal when said focusing is unsuccessful.

2. A disc reproducing apparatus, comprising:
an optical pickup for reproducing a signal recorded in a disc from the disc;
an amplifier for amplifying said signal outputted from this optical pickup at a predetermined gain;
a focus servo circuit for matching the focus of said optical pickup with said disc using said signal outputted from this amp; and
control means,
wherein said control means
executes focusing of said optical pickup using the gain of said amplifier as a reference gain when starting reproduction of said signal from said disc;
starts reproduction of said signal from said disc when this focusing is successful;
executes the second focusing of said optical pickup by setting the gain of said amplifier to a higher gain than said predetermined gain and starts reproduction of said signal when said focusing is unsuccessful; and
validates said focus servo circuit and starts reproduction of said signal from said disc when this second focusing is successful.

3. The disc reproducing apparatus according to claims 1 or 2, wherein a signal outputted from said amplifier is A/D-converted and then supplied to said focus servo circuit.

4. The disc reproducing apparatus according to claims 1, 2 or 3,wherein said disc is at least either a CD-ROM or a CD-R, and a CD-RW, and said apparatus can reproduce at least either said CD-ROM or said CD-R, and said CD-RW.

5. A disc reproducing method, comprising the steps of:
in the case of regenerating a signal recorded on a disc by an optical pickup and supplying this reproduced signal to a focus servo circuit via an amplifier and performing focus servo control of said optical pickup,
executing the first focusing of said optical pickup using the gain of said amplifier as a reference gain when starting reproduction of said signal from said pickup;
validating said focus servo circuit and starting reproduction of said signal from said signal when this first focusing is successful;
executing the second focusing of said optical pickup by setting the gain of said amplifier to a higher gain than said reference gain when said focusing is unsuccessful; and
validating said focus servo circuit and starting reproduction of said signal when this second focusing is successful.
